# EUROPEAN PATENT SPECIFICATION

(11) **EP 4 564 091 B1**
(45) Date of publication and mention of the grant of the patent: **02.12.2026**
(21) Application number: 23903123.0
(22) Date of filing: 25.10.2023
(51) Int. Cl.: G03B 17/56, B60R 11/02, F16B 7/20, G03B 15/00, H04N 23/51, F16M 11/10, F16M 13/02

(54) **FIXING STRUCTURE**
BEFESTIGUNGSSTRUKTUR
STRUCTURE DE FIXATION

(30) Priority: 14.12.2022 JP 2022199476
(43) Date of publication of application: 04.06.2025
(73) Proprietor: JVCKenwood Corporation, Yokohama-shi, Kanagawa 2210022 (JP)
(72) Inventor: TAKAHASHI, Yasuki, Yokohama-shi, Kanagawa 221-0022 (JP)
(74) Representative: Potter Clarkson
(86) International application number: PCT/JP2023/038564
(87) International publication number: WO 2024/127825

(56) References cited:
- CN-B- 102 042 467
- CN-U- 213 109 224
- JP-A- 2011 249 012
- JP-U- 3 029 339
- US-A- 3 924 775

## Description

### Technical Field

The present disclosure relates to a fixing structure.

### Background Art

When an image capturing apparatus such as a dashboard camera is mounted on each one of different vehicles, it is required to adjust a mounting angle for each of the vehicle models since a condition of a mounting position differs from one vehicle to another vehicle. For this reason, a fixing structure capable of adjusting the mounting angle is required.

Patent Literature 1 discloses an opening/closing mechanism including: a hollow cylindrical bearing body, a plurality of spline-shaped grooves being formed on an inner wall of the hollow interior thereof; a hollow cylindrical slider that is inserted into the bearing body and includes spline-shaped projections engaged with the grooves of the bearing body formed on an outer peripheral surface of the hollow cylindrical slider; and a shaft body that is inserted into the slider and includes projections engaged with the grooves of the slider formed on a part of an outer peripheral surface of the shaft body.

### Citation List

### Patent Literature

[Patent Literature 1] Japanese Unexamined Patent Application Publication No. H08-93303

Document No. US 3924775 relates to a positively angularly adjustable handle for portable apparatus which is substantially U-shaped and includes two parallel arms interconnected at one end thereof by means of a transversely extending bar and having inwardly projecting tubular journal members at the other ends thereof for mounting the handle within apertures provided within the apparatus. Upon the ex-ternal surface of the journals there is located, in serial fashion, a peripheral flange, arcuate stop members, and a series of splines, a circumferential bearing sur-face being interposed between the flange and the stop members and a circumferential recess being similarly interposed between the stop members and the splines.

Document No. JP 2011249012 provides a connector, etc. that is prevented from being inserted in error, and eliminates the need to largely rotate a plug, etc. when the plug is inserted into a socket. A plug-in connector comprises a pin plug 10 and a receptacle 20, and the pin plug 10 and receptacle 20 are connected to each other. A pin cover body 14 of the pin plug 10 is provided with a plurality of pin plug key projections 15 which are apart from one another in a peripheral direction, and a plurality of sets 28a-28e of a plurality of key grooves 28, which are apart from one another in the peripheral direction and fitted with the plurality of pin plug key projections 15, are arranged, shifting from one another in the peripheral direction, on a socket cover 27 of the receptacle 20. The receptacle 20 may be a socket plug

Document No. CN213109224U relates to a driving shooting and recording device which comprises a main shell, a fixing piece and a camera, the camera is connected with the fixing piece through the main shell, one end of the main shell is provided with a connecting part, the connecting part is provided with a first positioning part, and the first positioning part is provided with a second positioning part. An adjusting hole corresponding to the connecting part is formed in the fixing piece, the fixing piece is rotatably arranged on the connecting part in a sleeving mode through the adjusting hole, a second positioning part is arranged on the inner wall of the adjusting hole, and the main shell is rotatably connected with the adjusting hole through the connecting part. Therefore, the angle of the camera arranged on the main shell can be adjusted, the second positioning part positions the main shell through the first positioning part, and the camera is positioned at the corresponding angle**.**

### Summary of Invention

As described in the background art, when an image capturing apparatus such as a dashboard camera is mounted on a vehicle, it is required to mount the image capturing apparatus on the vehicle while adjusting a mounting angle for each vehicle model since a condition of a mounting position differs from one vehicle to another vehicle. For example, since the angle of the windshield differs from one vehicle to another vehicle, each time the image capturing apparatus is mounted on the windshield of a vehicle, it is required to adjust the mounting angle for this vehicle model to make sure that an image capturing direction of the image capturing apparatus faces an appropriate direction.

However, there is a problem that an operation of mounting the image capturing apparatus on each vehicle while adjusting the mounting angle for each vehicle model is complicated for a worker. Therefore, a fixing structure capable of facilitating the operation of mounting the image capturing apparatus on each vehicle while adjusting the mounting angle has been required.

In view of the aforementioned problem, an object of the present disclosure is to provide a fixing structure capable of facilitating an operation of mounting an image capturing apparatus on a vehicle while adjusting a mounting angle.

A fixing structure according to the present disclosure includes: a main body including a cylindrical columnar part; and a fixing part including a tubular recess into which the columnar part is fit. Fitting grooves are formed on an inner peripheral surface of the recess at predetermined angular intervals, positioning protrusions for positioning, which can be fit into the fitting grooves, and a plurality of first regulating protrusions whose height is lower than that of the positioning protrusions are formed on an outer peripheral surface of the columnar part, an angle of the main body relative to the fixing part is configured to be adjustable by selecting the fitting grooves into which the positioning protrusions of the columnar part are fit, and the first regulating protrusions regulate a position of the columnar part relative to the recess in such a way that the positioning protrusions are fit into the predetermined fitting grooves when the columnar part is fit into the recess.

According to the present disclosure, it is possible to provide a fixing structure capable of facilitating an operation of mounting an image capturing apparatus on a vehicle while adjusting a mounting angle.

### Brief Description of Drawings

Fig. 1 is a front view for describing a fixing structure according to an embodiment.
Fig. 2 is a side view for describing a main body included in the fixing structure according to the embodiment.
Fig. 3 is a side view for describing a fixing part included in the fixing structure according to the embodiment.
Fig. 4A is a front view for describing an operation when the main body is mounted on the fixing part.
Fig. 4B is a front view for describing an operation when the main body is mounted on the fixing part.
Fig. 4C is a front view for describing an operation when the main body is mounted on the fixing part.
Fig. 5 is a cross-sectional view taken along the line V-V of Fig. 4C.

### Description of Embodiments

Hereinafter, with reference to the drawings, an embodiment will be described.

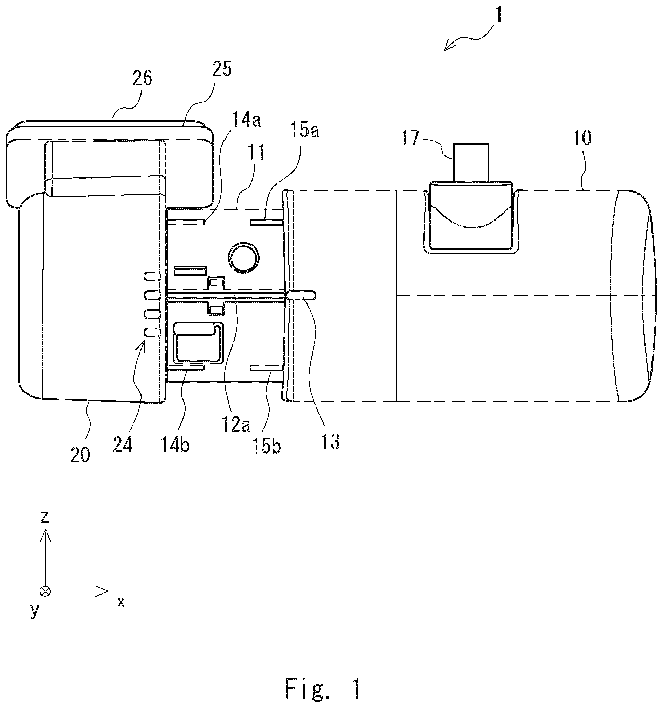

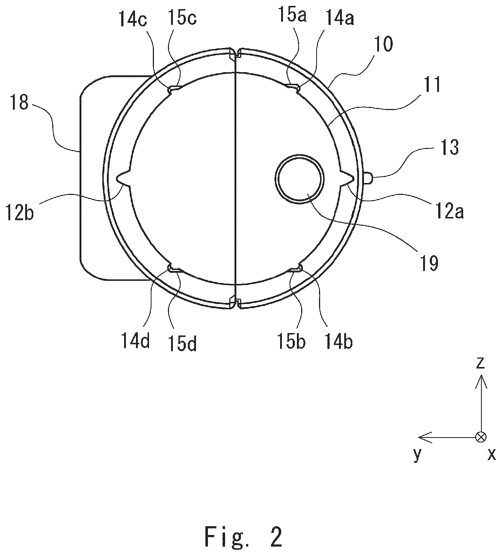

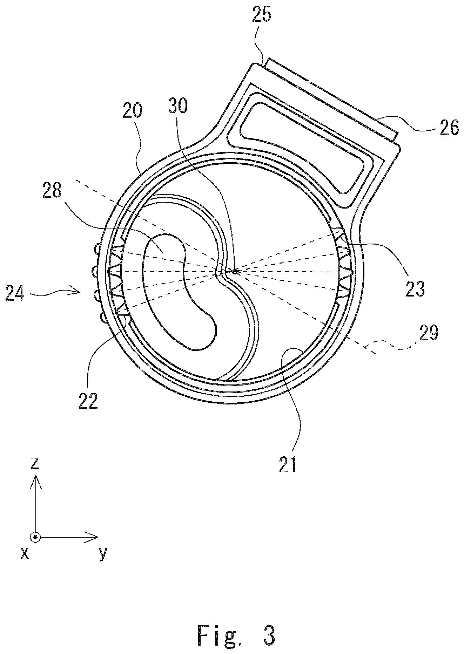

Fig. 1 is a front view for describing a fixing structure according to this embodiment. Fig. 2 is a side view for describing a fixing part included in the fixing structure according to this embodiment. Fig. 3 is a side view for describing a main body included in the fixing structure according to this embodiment.

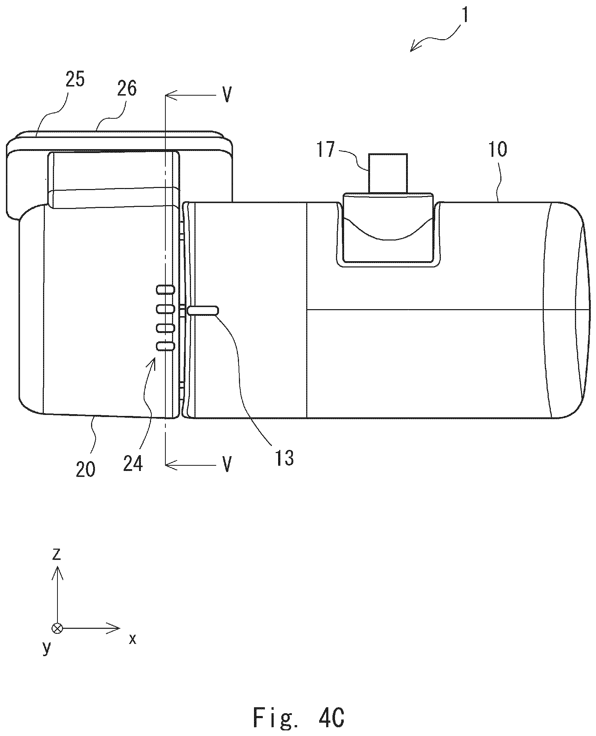

As shown in Fig. 1, a fixing structure 1 according to this embodiment includes a main body 10 and a fixing part 20. The main body 10 includes a cylindrical columnar part 11. The fixing part 20 includes a tubular recess 21 (see Fig. 3). In the fixing structure 1 according to this embodiment, the columnar part 11 of the main body 10 is fit into the recess 21 of the fixing part 20, whereby the main body 10 is fixed to the fixing part 20 (see Fig. 4C).

Hereinafter, as one example, a case where the fixing structure 1 according to this embodiment is applied to a fixing structure for fixing a vehicle image capturing apparatus will be described. That is, in a configuration example shown in Figs. 1-3, the main body 10 includes an image-capturing part 18 (see Fig. 2), and the fixing part 20 is configured to be mountable on a predetermined position (typically, a windshield or a rear glass) of the vehicle. Note that the fixing structure 1 according to this embodiment may be used for a structure other than the fixing structure for fixing the vehicle image capturing apparatus.

As shown in Figs. 1 and 2, the main body 10 includes the cylindrical columnar part 11. The columnar part 11 is provided to extend in the x-axis direction on the negative side of the x-axis direction of the main body 10. Positioning protrusions 12a and 12b, a plurality of first regulating protrusions 14a-14d, and a plurality of second regulating protrusions 15a-15d are formed on an outer peripheral surface of the columnar part 11.

The positioning protrusions 12a and 12b are formed to extend in the x-axis direction on the outer peripheral surface of the columnar part 11. As shown in Fig. 2, the positioning protrusions 12a and 12b are each located so as to be positionally shifted from each other by 180° in the circumferential direction on the outer peripheral surface of the columnar part 11. The positioning protrusions 12a and 12b are each configured in such a way that they can each be fit into one of a plurality of fitting grooves 22 and 23 (see Fig. 3) provided in the fixing part 20. That is, the positioning protrusions 12a and 12b are fit into the fitting grooves 22 and 23 of the fixing part 20, whereby an angle of the main body 10 relative to the fixing part 20 is adjusted. A mark 13 (see Fig. 1) is disposed on the front surface of the main body 10 that corresponds to at least one of the positioning protrusions 12a. By providing the mark 13, it becomes easy for a user to visually recognize the position of the positioning protrusion 12a. Accordingly, an operation of mounting the main body 10 on the fixing part 20 can be facilitated.

Fig. 2 shows a configuration example in which the positioning protrusions 12a and 12b are located so as to be positionally shifted from each other by 180° in the circumferential direction. Alternatively, in this embodiment, the number of positioning protrusions can be set to a desired number. For example, three positioning protrusions may be located so as to be positionally shifted from each other by 120° in the circumferential direction, or four positioning protrusions may be located so as to be positionally shifted from each other by 90° in the circumferential direction. In this case, fitting grooves are formed in the fixing part 20 in such a way that they correspond to the positioning protrusions.

As shown in Figs. 1 and 2, the plurality of first regulating protrusions 14a-14d are formed in such a way that they extend in the x-axis direction on the outer peripheral surface of the columnar part 11. Further, the plurality of first regulating protrusions 14a-14d are formed on an end part side of the columnar part 11 on a side thereof where the columnar part 11 is fit into the recess 21 (the negative side of the x-axis direction). As shown in Fig. 2, the plurality of first regulating protrusions 14a-14d are located so as to be positionally shifted from each other by 90° in the circumferential direction on the outer peripheral surface of the columnar part 11. At this time, the plurality of first regulating protrusions 14a-14d are formed between the positioning protrusion 12a and the positioning protrusion 12b on the outer peripheral surface of the columnar part 11. Specifically, the first regulating protrusions 14a and 14c are formed on the positive side of the z-axis direction between the positioning protrusion 12a and the positioning protrusion 12b, and the first regulating protrusions 14b and 14d are formed on the negative side of the z-axis direction between the positioning protrusion 12a and the positioning protrusion 12b.

The first regulating protrusions 14a-14d are configured to regulate the position of the columnar part 11 with respect to the recess 21 in such a way that the positioning protrusions 12a and 12b are fit into the predetermined fitting grooves 22 and 23 (see Fig. 3) when the columnar part 11 is fit into the recess 21. In other words, when the columnar part 11 is fit into the recess 21, the columnar part 11 is guided in such a way that the positioning protrusions 12a and 12b are fit into the fitting grooves 22 and 23 after at least one of the plurality of first regulating protrusions 14a-14d is abut to the inner peripheral surface of the recess 21. That is, the diameter of the outer peripheral surface of the columnar part 11 is smaller than the inner diameter of the recess 21. Therefore, in a state in which a part of the outer peripheral surface of the columnar part 11 directly contacts the inner surface of the recess 21, that is, in a state in which the columnar part 11 and the recess 21 are eccentric, it is possible that the fitting of the positioning protrusions 12a and 12b with the fitting grooves 22 and 23 may be inhibited. In this embodiment, the first regulating protrusions 14a-14d are provided, whereby it is possible to guide the columnar part 11 in such a way that the positioning protrusions 12a and 12b are fit into the fitting grooves 22 and 23.

As shown in Fig. 2, the plurality of first regulating protrusions 14a-14d are configured in such a way that the height thereof from the outer peripheral surface becomes lower than that of the positioning protrusions 12a and 12b. That is, the plurality of first regulating protrusions 14a-14d are configured in such a way that gaps are formed between the top part of each of the first regulating protrusions 14a-14d and the inner peripheral surface of the recess 21 in the state in which the columnar part 11 is fit into the recess 21. In other words, the radius of the recess 21 is made greater than a value obtained by adding the height of the first regulating protrusions 14a-14d to the radius of the outer peripheral surface of the columnar part 11. Consequently, the columnar part 11 can be easily fit into the recess 21. Further, since the first regulating protrusions 14a-14d are provided, it is possible to prevent the main body 10 from being displaced relative to the fixing part 20 after the main body 10 is fit into the fixing part 20, whereby it is possible to prevent the positioning protrusions 12a and 12b from being fit into fitting grooves 22 and 23 other than the expected ones and to fix the main body 10 to the fixing part 20 in a stable manner.

As shown in Fig. 1, the plurality of second regulating protrusions 15a-15d are formed on an end part side on the positive side of the x-axis direction of the columnar part 11, that is, on the positive side of the x-axis direction with respect to the plurality of first regulating protrusions 14a-14d. The plurality of second regulating protrusions 15a-15d have a function for regulating and stabilizing the position of the columnar part 11 with respect to the recess 21 when the columnar part 11 is fit into the recess 21. In other words, gaps formed between the second regulating protrusions 15a-15d and the inner peripheral surface of the recess 21 can be made small, whereby the columnar part 11 can be fixed to the recess 21 in a stable manner. The plurality of second regulating protrusions 15a-15d are formed to extend in the x-axis direction on the outer peripheral surface of the columnar part 11.

As shown in Fig. 2, the plurality of second regulating protrusions 15a-15d are located so as to be positionally shifted from each other by 90° in the circumferential direction on the outer peripheral surface of the columnar part 11. Specifically, the second regulating protrusions 15a and 15c are formed on the positive side of the z-axis direction between the positioning protrusion 12a, and the positioning protrusion 12b and the second regulating protrusions 15b and 15d are formed on the negative side of the z-axis direction between the positioning protrusion 12a and the positioning protrusion 12b.

In the configuration examples shown in Figs. 1 and 2, the plurality of first regulating protrusions 14a-14d and the plurality of second regulating protrusions 15a-15d are formed to be aligned on one line in the x-axis direction. Alternatively, in this embodiment, the plurality of first regulating protrusions 14a-14d and the plurality of second regulating protrusions 15a-15d may be formed in such a way that the plurality of first regulating protrusions 14a-14d and the plurality of second regulating protrusions 15a-15d are not aligned on one line in the x-axis direction, that is, in such a way that they are positionally shifted from each other in the circumferential direction of the outer peripheral surface of the columnar part 11.

The plurality of second regulating protrusions 15a-15d have a function of regulating and stabilizing, when the columnar part 11 is fit into the recess 21, the position of the columnar part 11 with respect to the recess 21. As shown in Fig. 2, the plurality of second regulating protrusions 15a-15d are configured in such a way that the height thereof from the outer peripheral surface becomes lower than that of the positioning protrusions 12a and 12b. That is, the plurality of second regulating protrusions 15a-15d are configured in such a way that gaps are formed between the top part of each of the second regulating protrusions 15a-15d and the inner peripheral surface of the recess 21 in the state in which the columnar part 11 is fit into the recess 21. Further, as shown in Fig. 2, the plurality of second regulating protrusions 15a-15d may be configured in such a way that the height thereof becomes higher than that of the plurality of first regulating protrusions 14a-14d. With this configuration, when the columnar part 11 is fit into the recess 21, the gaps formed between the second regulating protrusions 15a-15d and the inner peripheral surface of the recess 21 can be made small, whereby it is possible to fix the columnar part 11 to the recess 21 more stably.

As shown in Fig. 2, the mage-capturing part 18 is disposed on the positive side of the y-axis direction of the main body 10. The image-capturing part 18, which can be constituted using a camera, is configured to be able to capture a video image on the positive side of the y-axis direction. As shown in Fig. 1, a cable 17 is disposed on the positive side of the z-axis direction of the main body 10. For example, the cable 17 is a power supply cable, and power is supplied to the main body 10 via the power supply cable.

As shown in Fig. 2, a fixed screw hole 19 is disposed on an end part on the negative side of the x-axis direction of the main body 10. The fixed screw hole 19 is configured to be located in a hole part 28 (see Fig. 3) of the fixing part 20. For example, after the main body 10 is mounted on the fixing part 20, a screw is screwed into the fixed screw hole 19, whereby the main body 10 can be fixed to the fixing part 20.

As shown in Figs. 1 and 3, the fixing part 20 includes a mounting surface 25. An adhesive member 26 is disposed on the mounting surface 25. When the fixing part 20 is mounted on the windshield of the vehicle, the mounting surface 25 of the fixing part 20 is mounted on the windshield of the vehicle by using the adhesive member 26. Accordingly, the fixing part 20 can be fixed to the windshield of the vehicle.

Further, as shown in Figs. 1 and 3, the fixing part 20 includes the tubular recess 21. The columnar part 11 of the main body 10 is fit into the tubular recess 21. As shown in Fig. 3, the fitting grooves 22 and 23 are formed, on the inner peripheral surface of the recess 21, at predetermined angular intervals at positions opposed to each other about a central axis 30 of the recess 21. In other words, the fitting grooves 22 and 23 are formed in pairs at positions opposed to each other about the central axis 30 of the recess 21. Then, the fixing structure 1 according to this embodiment is able to adjust the angle of the main body 10 relative to the fixing part 20 by selecting the fitting grooves 22 and 23 into which the positioning protrusions 12a and 12b of the columnar part 11 are fit.

That is, as shown in Fig. 3, the plurality of fitting grooves 22 and 23 are disposed so as to be opposed to each other about the central axis 30. Specifically, the fitting grooves 22 and 23 are formed in such a way that the lines that connect the respective fitting grooves 22 to the respective fitting grooves 23 are lines that pass through the central axis 30 (shown by broken lines in Fig. 3). In this embodiment, by selecting the combination of the fitting grooves 22 and 23 into which the positioning protrusions 12a and 12b of the columnar part 11 are fit, the angle of the main body 10 relative to the fixing part 20 can be determined from among a plurality of angles about the central axis 30. In the configuration example in Fig. 3, one of four angles 20°, 30°, 40°, and 50° with respect to a reference surface 29, which is parallel to the mounting surface 25, can be selected.

Marks 24 are disposed on a front surface of the fixing part 20 corresponding to the positions where the plurality of fitting grooves 22 are formed. By providing the marks 24, the user can visually recognize the positions of the fitting grooves 22 easily. Accordingly, an operation of mounting the main body 10 on the fixing part 20 can be facilitated. In this embodiment, the mounting surface 25 of the fixing part 20 is mounted on the windshield. Therefore, the marks 24 are provided on the side of the fitting grooves 22, not on the side of the fitting grooves 23, so that the user can visually recognize the positions of the fitting grooves 22 when the user fixes the main body 10 to the fixing part 20.

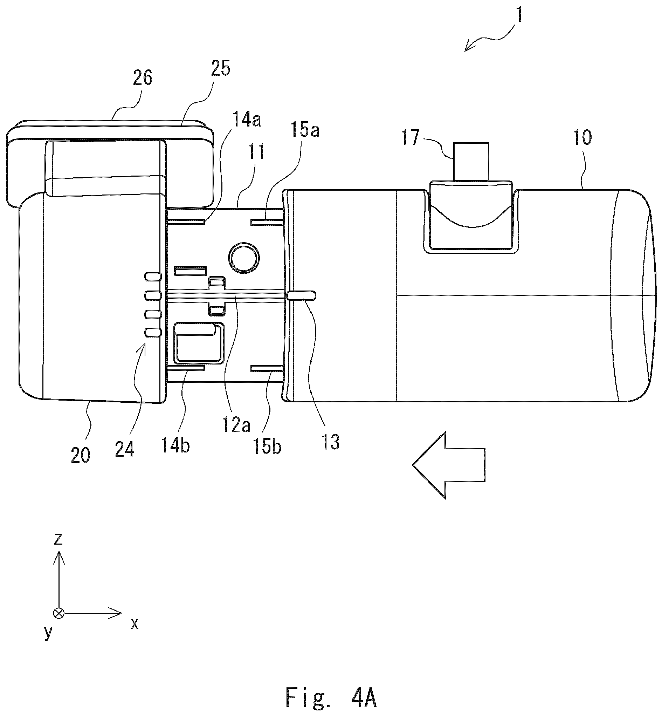

Next, with reference to Figs. 4A-4C, an operation when the main body 10 is mounted on the fixing part 20 will be described. First, as shown in Fig. 4A, the mounting angle when the main body 10 is mounted on the fixing part 20 is determined. Specifically, fitting grooves 22 and 23 into which the positioning protrusions 12a and 12b of the main body 10 are fit are determined from among the fitting grooves 22 and 23 of the fixing part 20, and thus the angle at which the main body 10 is mounted on the fixing part 20 is determined. At this time, by using the marks 24 provided in the fixing part 20 and the mark 13 provided in the main body 10, the positions of the positioning protrusions 12a and 12b of the main body 10 and the fitting grooves 22 and 23 of the fixing part 20 are determined. In Figs. 4A-4C, the marks 13 and 24 are disposed on the inner side of the vehicle, and therefore the image-capturing part 18 (see Fig. 2) is not shown in Figs. 4A-4C. That is, since the image-capturing part 18 is mounted in such a way that it faces outside of the vehicle, the marks 13 and 24 are disposed in such a way that a person who installs the main body 10 and is present on the inner side of the vehicle can see the marks 13 and 24. On the other hand, if the camera is a camera that captures an image of the inside of the vehicle, the marks 13 and 24 and the image-capturing part 18 are provided on the same side.

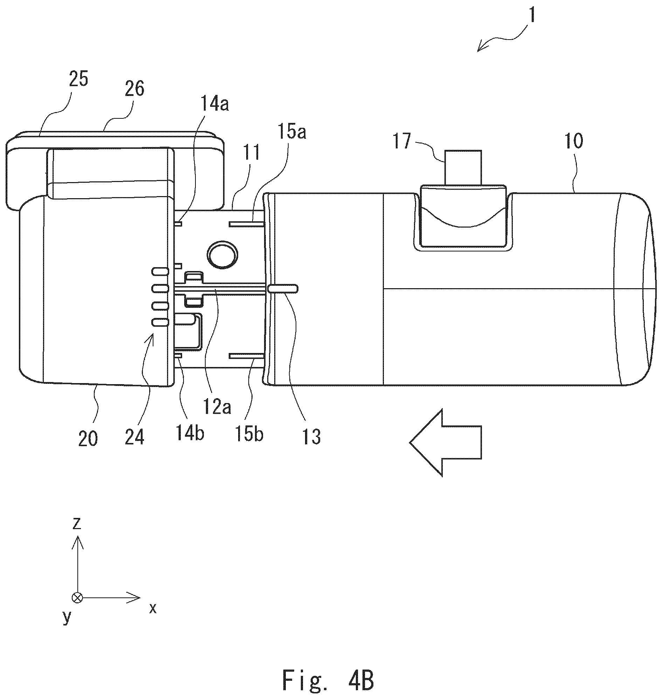

Then, as shown in Fig. 4B, the main body 10 is moved toward the negative side of the x-axis direction to cause the columnar part 11 of the main body 10 to be fit into the recess 21 of the fixing part 20. At this time, the first regulating protrusions 14a-14d regulate the position of the columnar part 11 with respect to the recess 21 in such a way that the positioning protrusions 12a and 12b are fit into the predetermined fitting grooves 22 and 23 when the columnar part 11 is fit into the recess 21.

When, for example, the direction in which the main body 10 moves becomes oblique relative to the x-axis direction, it is possible that the positions of the positioning protrusions 12a and 12b of the main body 10 may be deviated with respect to the fitting grooves 22 and 23 of the fixing part 20. Further, the diameter of the columnar part 11 of the main body 10 is smaller than the diameter of the recess 21 of the fixing part 20. Therefore, if the central axis of the columnar part 11 of the main body 10 and the central axis of the recess 21 of the fixing part 20 are deviated from each other, it is possible, for example, that one positioning protrusion 12b may be fit into the intended fitting groove 23, whereas the other positioning protrusion 12a may be fit into a groove that is next to the intended fitting groove 22.

In order to solve the aforementioned problem, in this embodiment, the plurality of first regulating protrusions 14a-14d are provided in the main body 10. In this embodiment, since the plurality of first regulating protrusions 14a-14d are provided in the main body 10, when the columnar part 11 is fit into the recess 21, the position of the columnar part 11 with respect to the recess 21 is regulated. Accordingly, it is possible to prevent the positions of the positioning protrusions 12a and 12b from being deviated relative to the fitting grooves 22 and 23. That is, it is possible to prevent or reduce a situation in which the central axis of the columnar part 11 of the main body 10 and the central axis of the recess 21 of the fixing part 20 are deviated from each other and the positioning protrusions 12a and 12b are fit into unintended fitting grooves 22 and 23. In other words, when the columnar part 11 is fit into the recess 21, at least one of the plurality of first regulating protrusions 14a-14d is abut to the inner peripheral surface of the recess 21, which suppresses eccentricity of the columnar part 11 and the recess 21, whereby it is possible to guide the columnar part 11 in such a way that the positioning protrusions 12a and 12b are fit into the fitting grooves 22 and 23.

After that, as shown in Fig. 4C, the main body 10 is moved toward the negative side of the x-axis direction to cause the columnar part 11 of the main body 10 to be fit into the recess 21 of the fixing part 20. Consequently, the main body 10 is fixed to the fixing part 20. After that, the fixing part 20 to which the main body 10 is fixed is mounted on a windshield (not shown). Specifically, by mounting the mounting surface 25 of the fixing part 20 on the windshield of the vehicle by using the adhesive member 26, the fixing part 20 to which the main body 10 is fixed is fixed to the windshield.

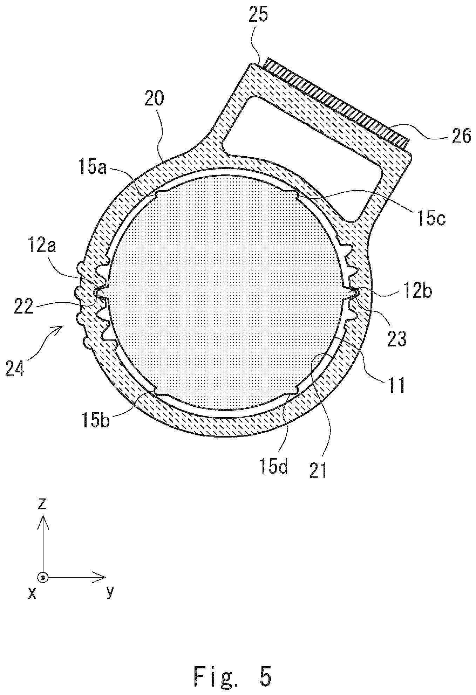

In this embodiment, as shown in the cross-sectional view in Fig. 5, the positioning protrusions 12a and 12b are fit into the fitting grooves 22 and 23 of the fixing part 20, whereby the angle of the main body 10 relative to the fixing part 20 is adjusted. The configuration example shown in Fig. 5 shows an example in which the main body 10 is mounted on the fixing part 20 at an angle of 30° relative to the reference surface 29 (see Fig. 3), which is parallel to the mounting surface 25. Further, the plurality of second regulating protrusions 15a-15d are disposed inside the recess 21. It is therefore possible to prevent the main body 10 from being displaced with respect to the fixing part 20. Therefore, the main body 10 can be fixed to the fixing part 20 in a stable manner.

Further, as shown in Fig. 5, the plurality of second regulating protrusions 15a-15d may each have a lying shape in a circumferential direction of the outer peripheral surface of the columnar part 11 in a cross section perpendicular to the central axis 30, that is, a cross section cut in the yz-plane. In this manner, the cross-sectional shape of the second regulating protrusions 15a-15d is formed to be a lying shape, in other words, a flat shape, or more specifically, a mountainous shape that is biased toward one side, whereby the strength of the second regulating protrusions 15a-15d can be improved. The plurality of first regulating protrusions 14a-14d may also each have a lying shape in the circumferential direction of the outer peripheral surface of the columnar part 11 in a cross section cut in the yz-plane.

Further, in this embodiment, the cross-sectional shape of the second regulating protrusions 15a-15d is formed to be a lying shape in the y-axis direction, whereby the main body 10 can be easily manufactured. That is, the surface on the positive side of the z-axis direction of the second regulating protrusions 15a and 15c (a surface that forms the second regulating protrusions) is made to be parallel to the xy-plane and the surface on the negative side of the z-axis direction of the second regulating protrusions 15b and 15d (a surface that forms the second regulating protrusions) is made to be parallel to the xy-plane. With this configuration, when the main body 10 is injection-molded using two molds, these two molds can be pulled out both on the positive side and the negative side in the y-axis direction, whereby the main body 10 can be easily manufactured. Regarding the plurality of first regulating protrusions 14a-14d as well, the cross-sectional shape of the plurality of first regulating protrusions 14a-14d may be a lying shape in the y-axis direction.

As described above, the fixing structure 1 according to this embodiment includes the main body 10 including the cylindrical columnar part 11, and the fixing part 20 including the tubular recess 21 into which the columnar part 11 is fit. The fitting grooves 22 and 23 are formed at predetermined angular intervals at positions opposed to each other about the central axis of the recess 21 on the inner peripheral surface of the recess 21. The positioning protrusions 12a and 12b for positioning, which can be fit into the fitting grooves 22 and 23, and the plurality of first regulating protrusions 14a-14d whose height is lower than that of the positioning protrusions 12a and 12b are formed on the outer peripheral surface of the columnar part 11. Further, the fixing structure 1 according to this embodiment is configured to be able to adjust the angle of the main body 10 relative to the fixing part 20 by selecting the fitting grooves 22 and 23 into which the positioning protrusions 12a and 12b of the columnar part 11 are fit. Then, the first regulating protrusions 14a-14d are configured to regulate the position of the columnar part 11 with respect to the recess 21 in such a way that the positioning protrusions 12a and 12b are fit into the predetermined fitting grooves 22 and 23 when the columnar part 11 is fit into the recess 21.

As described above, in this embodiment, since the plurality of first regulating protrusions 14a-14d are provided in the main body 10, when the columnar part 11 is fit into the recess 21, the position of the columnar part 11 with respect to the recess 21 is regulated. It is therefore possible to prevent the positions of the positioning protrusions 12a and 12b from being deviated relative to the fitting grooves 22 and 23. In other words, when the columnar part 11 is fit into the recess 21, the columnar part 11 is guided in such a way that the positioning protrusions 12a and 12b are fit into the fitting grooves 22 and 23 after at least one of the plurality of first regulating protrusions 14a-14d is abut to the inner peripheral surface of the recess 21. Accordingly, according to this embodiment, it is possible to provide a fixing structure capable of facilitating the operation of mounting the image capturing apparatus on the vehicle while adjusting the mounting angle.

While the present invention has been described in view of the aforementioned embodiment, the present invention is not limited to the configuration in the above-described embodiment. As a matter of course, the present invention includes various changes, modifications, and combinations that one skilled in the art might make within the scope of the invention as set forth in claims of the present application.

This application is based upon and claims the benefit of priority from Japanese patent application No. 2022-199476, filed on December 14, 2022.

### Industrial Applicability

The fixing structure according to the present disclosure can be widely used as a structure for mounting an image capturing apparatus such as a dashboard camera on a vehicle.

### Reference Signs List

10 Main Body
11 Columnar Part
12a, 12b Positioning Protrusion
14a, 14b, 14c, 14d First Regulating Protrusion
15a, 15b, 15c, 15d Second Regulating Protrusion
20 Fixing Part
21 Recess
22, 23 Fitting Groove

## Claims

1. A fixing structure (1) comprising:
a main body (10) including a cylindrical columnar part (11), and
a fixing part (20) including a tubular recess (21) into which the columnar part (11) is fit, wherein
fitting grooves (22, 23) are formed on an inner peripheral surface of the recess(21) at predetermined angular intervals,
positioning protrusions (12a, 12b) for positioning, which can be fit into the fitting grooves (22, 23), and a plurality of first regulating protrusions (14a, 14b, 14c, 14d) whose height is lower than that of the positioning protrusions (12a, 12b) are formed on an outer peripheral surface of the columnar part (11),
an angle of the main body (10) relative to the fixing part (20) is configured to be adjustable by selecting the fitting grooves (22, 23) into which the positioning protrusions (12a, 12b) of the columnar part (11) are fit, and the first regulating protrusions (14a, 14b, 14c, 14d) regulate a position of the columnar part (11) relative to the recess (21) in such a way that the positioning protrusions (12a, 12b) are fit into the predetermined fitting grooves when the columnar part (11) is fit into the recess(21) **characterised in that** the first regulating protrusions (14a, 14b, 14c, 14d) are formed on a first end part side of the columnar part (11), which is a side of the columnar part (11) fit into the recess (21), and
a second regulating protrusion (15a, 15b, 15c, 15d) for regulating and stabilizing a position of the columnar part (11) relative to the recess (21) when the columnar part (11)is fit into the recess is further formed on a second end part side of the columnar part (11), which is a side opposite to the first end part side.

2. The fixing structure (1) according to claim 1, wherein the first regulating protrusions (14a, 14b, 14c, 14d) regulate eccentricity of the main body (10) and the fixing part (20) when the columnar part (11) is fit into the recess.

3. The fixing structure according to claim 1 or 2, wherein gaps are formed between a top part of each of the first regulating protrusions and the inner peripheral surface of the recess in a state in which the columnar part is fit into the recess.

4. The fixing structure (1) according to claim 1 or 2, wherein a radius of the recess (21) is greater than a value obtained by adding the height of the first regulating protrusion (14a, 14b, 14c, 14d) to a radius on the outer peripheral surface of the columnar part.

5. The fixing structure (1) according to claim 1 or 2, wherein the first regulating protrusions (14a, 14b, 14c, 14d) each have a lying shape in a circumferential direction of the outer peripheral surface of the columnar part (11) in a cross section perpendicular to a central axis of the columnar part (11).

6. The fixing structure (1) according to claim 1 or 2, wherein a surface that forms the first regulating protrusions (14a, 14b, 14c, 14d) coincides with a mold removal direction when the main body (10) is molded.

7. The fixing structure (1) according to claim 1 or 2, wherein marks are formed, on an outer peripheral surface of the fixing part, at positions that correspond to the fitting grooves formed on the inner peripheral surface of the recess

8. The fixing structure according to claim 1 or 2, wherein
the first regulating protrusions (14a, 14b, 14c, 14d) are formed on a first end part side of the columnar part (11), which is a side of the columnar part (11) fit into the recess,
a second regulating protrusion (15a, 15b, 15c, 15d) for regulating and stabilizing a position of the columnar part (11) relative to the recess (21) when the columnar part (11) is fit into the recess (21) is further formed on a second end part side of the columnar part (11), which is a side opposite to the first end part side, and
the second regulating protrusion (15a, 15b, 15c, 15d) is configured to be higher than the first regulating protrusion (14a, 14b, 14c, 14d).

## Patentansprüche

1. Befestigungsstruktur (1), umfassend:
einen Hauptkörper (10), der einen zylindrischen säulenförmigen Teil (11) einschließt; und
einen Befestigungsteil (20), der eine rohrförmige Ausnehmung (21) einschließt, in die der säulenförmige Teil (11) eingepasst ist, wobei
Passnuten (22, 23) an einer Innenumfangsoberfläche der Ausnehmung (21) in vorbestimmten Winkelabständen ausgebildet sind,
Positionierungsvorsprünge (12a, 12b) zur Positionierung, die in die Passnuten (22, 23) eingepasst werden können, und eine Vielzahl von ersten Regulierungsvorsprüngen (14a, 14b, 14c, 14d), deren Höhe niedriger ist als die der Positionierungsvorsprünge (12a, 12b), an einer Außenumfangsoberfläche des säulenförmigen Teils (11) ausgebildet sind,
ein Winkel des Hauptkörpers (10) relativ zum Befestigungsteil (20) konfiguriert ist, um durch Auswählen der Passnuten (22, 23), in die die Positionierungsvorsprünge (12a, 12b) des säulenförmigen Teils (11) eingepasst werden, anpassbar zu sein, und
die ersten Regulierungsvorsprünge (14a, 14b, 14c, 14d) eine Position des säulenförmigen Teils (11) relativ zu der Ausnehmung (21) derart regulieren, dass die Positionierungsvorsprünge (12a, 12b) in die vorbestimmten Passnuten eingepasst werden, wenn der säulenförmige Teil (11) in die Ausnehmung (21) eingepasst wird, **dadurch gekennzeichnet, dass** die ersten Regulierungsvorsprünge (14a, 14b, 14c, 14d) auf einer ersten Endteilseite des säulenförmigen Teils (11) ausgebildet sind, die eine Seite des säulenförmigen Teils (11) ist, die in die Ausnehmung (21) eingepasst wird, und
ein zweiter Regulierungsvorsprung (15a, 15b, 15c, 15d) zum Regulieren und Stabilisieren einer Position des säulenförmigen Teils (11) relativ zu der Ausnehmung (21), wenn der säulenförmige Teil (11) in die Ausnehmung eingepasst wird, ferner auf einer zweiten Endteilseite des säulenförmigen Teils (11) ausgebildet ist, die eine der ersten Endteilseite gegenüberliegende Seite ist.

2. Befestigungsstruktur (1) nach Anspruch 1, wobei die ersten Regulierungsvorsprünge (14a, 14b, 14c, 14d) die Exzentrizität des Hauptkörpers (10) und des Befestigungsteils (20) regulieren, wenn der säulenförmige Teil (11) in die Ausnehmung eingepasst wird.

3. Befestigungsstruktur nach Anspruch 1 oder 2, wobei Spalte zwischen einem oberen Teil jedes der ersten Regulierungsvorsprünge und der Innenumfangsoberfläche der Ausnehmung in einem Zustand ausgebildet sind, in dem der säulenförmige Teil in die Ausnehmung eingepasst wird.

4. Befestigungsstruktur (1) nach Anspruch 1 oder 2, wobei ein Radius der Ausnehmung (21) größer ist als ein Wert, der durch Addieren der Höhe des ersten Regulierungsvorsprungs (14a, 14b, 14c, 14d) zu einem Radius auf der Außenumfangsoberfläche des säulenförmigen Teils erhalten wird.

5. Befestigungsstruktur (1) nach Anspruch 1 oder 2, wobei ersten Regulierungsvorsprünge (14a, 14b, 14c, 14d) in einem Querschnitt senkrecht zu einer Mittelachse des säulenförmigen Teils (11) jeweils eine liegende Form in einer Umfangsrichtung der Außenumfangsoberfläche des säulenförmigen Teils (11) aufweisen.

6. Befestigungsstruktur (1) nach Anspruch 1 oder 2, wobei eine Oberfläche, die die ersten Regulierungsvorsprünge (14a, 14b, 14c, 14d) bildet, mit einer Formenentfernungsrichtung übereinstimmt, wenn der Hauptkörper (10) geformt wird.

7. Befestigungsstruktur (1) nach Anspruch 1 oder 2, wobei Markierungen an einer Außenumfangsoberfläche des Befestigungsteils an Positionen ausgebildet sind, die den Passnuten entsprechen, die an der Innenumfangsoberfläche der Ausnehmung ausgebildet sind.

8. Befestigungsstruktur nach Anspruch 1 oder 2, wobei
die ersten Regulierungsvorsprünge (14a, 14b, 14c, 14d) auf einer ersten Endteilseite des säulenförmigen Teils (11) ausgebildet sind, die eine in die Ausnehmung eingepasste Seite des säulenförmigen Teils (11) ist,
ein zweiter Regulierungsvorsprung (15a, 15b, 15c, 15d) zum Regulieren und Stabilisieren einer Position des säulenförmigen Teils (11) relativ zu der Ausnehmung (21), wenn das säulenförmige Teil (11) in die Ausnehmung (21) eingepasst wird, ferner auf einer zweiten Endteilseite des säulenförmigen Teils (11) ausgebildet ist, die eine der ersten Endteilseite gegenüberliegende Seite ist, und
der zweite Regulierungsvorsprung (15a, 15b, 15c, 15d) konfiguriert ist, um höher als der erste Regulierungsvorsprung (14a, 14b, 14c, 14d) zu sein.

## Revendications

1. Structure de fixation (1) comprenant :
un corps principal (10) comportant une partie en forme de colonne cylindrique (11) ; et
une partie de fixation (20) comportant un évidement tubulaire (21) dans lequel la partie en forme de colonne (11) est insérée, dans laquelle
des rainures d'insertion (22, 23) sont formées sur une surface périphérique interne de l'évidement (21) à des intervalles angulaires prédéterminés,
des saillies de positionnement (12a, 12b) pour un positionnement, qui peuvent s'insérer dans les rainures d'insertion (22, 23), et une pluralité de premières saillies de guidage (14a, 14b, 14c, 14d), dont la hauteur est inférieure à celle des saillies de positionnement (12a, 12b), sont formées sur une surface périphérique externe de la partie en forme de colonne (11),
un angle du corps principal (10) par rapport à la partie de fixation (20) est conçu pour être ajustable en sélectionnant les rainures d'insertion (22, 23) dans lesquelles les saillies de positionnement (12a, 12b) de la partie en forme de colonne (11) sont insérées, et
les premières saillies de guidage (14a, 14b, 14c, 14d) guident une position de la partie en forme de colonne (11) par rapport à l'évidement (21) de telle sorte que les saillies de positionnement (12a, 12b) sont insérées dans les rainures d'insertion prédéterminées lorsque la partie en forme de colonne (11) est insérée dans l'évidement (21) **caractérisée en ce que** les premières saillies de guidage (14a, 14b, 14c, 14d) sont formées sur un côté de première partie d'extrémité de la partie en forme de colonne (11), qui est un côté de la partie en forme de colonne (11) inséré dans l'évidement (21), et
une seconde saillie de guidage (15a, 15b, 15c, 15d) pour guider et stabiliser une position de la partie en forme de colonne (11) par rapport à l'évidement (21), lorsque la partie en forme de colonne (11) est insérée dans l'évidement, est en outre formée sur un côté de seconde partie d'extrémité de la partie en forme de colonne (11), qui est un côté opposé au côté de première partie d'extrémité.

2. Structure de fixation (1) selon la revendication 1, dans laquelle les premières saillies de guidage (14a, 14b, 14c, 14d) guident une excentricité du corps principal (10) et de la partie de fixation (20) lorsque la partie en forme de colonne (11) est insérée dans l'évidement.

3. Structure de fixation selon la revendication 1 ou 2, dans laquelle des espaces sont formés entre une partie supérieure de chacune des premières saillies de guidage et la surface périphérique interne de l'évidement dans un état dans lequel la partie en forme de colonne est insérée dans l'évidement.

4. Structure de fixation (1) selon la revendication 1 ou 2, dans laquelle un rayon de l'évidement (21) est supérieur à une valeur obtenue en ajoutant la hauteur de la première saillie de guidage (14a, 14b, 14c, 14d) à un rayon sur la surface périphérique externe de la partie en forme de colonne.

5. Structure de fixation (1) selon la revendication 1 ou 2, dans laquelle les premières saillies de guidage (14a, 14b, 14c, 14d) ont chacune une forme couchée dans une direction circonférentielle de la surface périphérique externe de la partie en forme de colonne (11) dans une section transversale perpendiculaire à un axe central de la partie en forme de colonne (11).

6. Structure de fixation (1) selon la revendication 1 ou 2, dans laquelle une surface qui forme les premières saillies de guidage (14a, 14b, 14c, 14d) coïncide avec une direction de démoulage lorsque le corps principal (10) est moulé.

7. Structure de fixation (1) selon la revendication 1 ou 2, dans laquelle des marques sont formées, sur une surface périphérique externe de la partie de fixation, au niveau de positions qui correspondent aux rainures d'insertion formées sur la surface périphérique interne de l'évidement.

8. Structure de fixation selon la revendication 1 ou 2, dans laquelle les premières saillies de guidage (14a, 14b, 14c, 14d) sont formées sur un côté de première partie d'extrémité de la partie en forme de colonne (11), qui est un côté de la partie en forme de colonne (11) inséré dans l'évidement,
une seconde saillie de guidage (15a, 15b, 15c, 15d) pour guider et stabiliser une position de la partie en forme de colonne (11) par rapport à l'évidement (21), lorsque la partie en forme de colonne (11) est insérée dans l'évidement (21), est en outre formée sur un côté de seconde partie d'extrémité de la partie en forme de colonne (11), qui est un côté opposé au côté de première partie d'extrémité, et
la seconde saillie de guidage (15a, 15b, 15c, 15d) est conçue pour être plus haute que la première saillie de guidage (14a, 14b, 14c, 14d).
